# EUROPEAN PATENT APPLICATION

(11) **EP 2 085 886 A1**
(43) Date of publication of application: **05.08.2009**
(21) Application number: 08253820.8
(22) Date of filing: 26.11.2008
(51) Int. Cl.: G06F 12/02

(54) **Memory management device applied to shared-memory multiprocessor**

(30) Priority: 29.01.2008 JP 2008018035
(71) Applicant: Kabushiki Kaisha Toshiba, Minato-ku Tokyo (JP)
(72) Inventor: Nonogaki, Nobuhiro c/o Intellectual Property Division, Tokyo 105-8001 (JP)
(74) Representative: Maury, Richard Philip

(57) **Abstract**

A plurality of processors (11) are capable of parallel operation. A memory (13) is shared by the plurality of processors. The memory (13) has an allocated memory size (22e) indicating the size of an area allocated to an allocatable area in the memory at the request of one of the plurality of processors and a deallocated memory size (22f) indicating the size of a deallocated area in the allocated area. One of the plurality of processors (11) compares the allocated memory size with the deallocated memory size, thereby determining whether the memory is reusable.

## Description

This invention relates to a memory management device applied to, for example, a plurality of microprocessors and a shared-memory multiprocessor shared by the microprocessors.

With this type of shared-memory multiprocessor, when a software program that processes continuous data continuously as in a video replay or a digital signal process is created, it is necessary to guarantee that a memory shared by a plurality of microprocessors is updated exclusively (refer to, for example, Jpn. Pat. Appln. KOKAI Publication No. 9-305418). In the guarantee method, it is common practice to explicitly perform exclusive control in such a manner that the memory area is locked before the shared memory is updated and, when the updated has been completed, the memory area is unlocked. The locking of the memory area permits only a software program on one processor core to be secured for a period of time. Therefore, as the number of processor cores increases, a so-called lock collision takes place frequently to secure a lock, which is a factor that decreases the processing performance of the microprocessors sharply.

Furthermore, when processing is done by a plurality of microprocessors, the order in which the memory areas are freed is moved forward or back, depending on the contents of the process or the state of the processor. Accordingly, a conventional single-processor memory management method of, when freeing a memory area, merging its adjacent ones is not necessarily effective.

As general memory management realization methods, a first fit method and a best fit method are known (refer to, for example, "Data Structures Using Java," Author: Langsam, Yediyah/Augenstein, Moshe J./Tenenbaum, Aaron M., Publisher: Pearson Education Limited Published 2003/04, ISBN:9780130477217). These methods are to connect free memory areas in list form, search for a necessary and sufficient memory area, and allocate the connected area to the searched area. Since the free memory areas are managed in list form, exclusive control by locking is indispensable. Moreover, in a case where the memory area is unlocked, when a free memory area adjacent to the memory area is merged, the list of free memory areas is left locked while the memory areas are being merged, which makes the locked states more liable to collide with one another.

When free memory areas are managed in list form in a memory pool method generally used in many embedded systems, the memory areas have to be controlled exclusively by locking. Since this method need not merge free memory areas, the collision of the locked states is alleviated. However, in the memory pool method, a pool is prepared for the size of each memory to be allocated. Therefore, it is necessary to secure memory pools in advance according to the maximum amount of memory to be used, which decreases the memory use efficiency considerably.

As for related technology, the following have been developed: a hybrid of the first fit method and the memory pool method (refer to, for example, Jpn. Pat. Appln. KOKAI Publication No. 2005-50010) and a memory area management method capable of using memory effectively for not only steady traffic but also burst traffic (refer to, for example, Jpn. Pat. Appln. KOKAI Publication No. 2006-126973).

A continuous process of continuous data, such as a video replay (hereinafter, referred to as a stream process) is characterized by repeatedly allocating and deallocating memory areas which are of a fixed length and have a similar duration of use. Moreover, the stream process is **characterized in that** the necessary amount of memory varies according to the load to be processed. Accordingly, neither of the above methods can manage the memory efficiently. Therefore, a memory management device capable of managing the memory efficiently in processing data by use of a shared memory shared by a plurality of processors has been desired.

According to a first aspect of the invention, there is provided a memory management device comprising: a plurality of processors capable of parallel operation; and a memory which is shared by said plurality of processors and which has an allocated memory size indicating the size of an area allocated to an allocatable area in the memory at the request of one of said plurality of processors and a deallocated memory size indicating the size of a deallocated area in the allocated area, wherein one of said plurality of processors compares the allocated memory size with the deallocated memory size, thereby determining whether the memory is reusable.

According to a second aspect of the invention, there is provided a memory management method of managing memory with a plurality of processors capable of parallel operation, the memory management method comprising: comparing an allocated memory size with a deallocated memory size stored in the memory with one of said plurality of processors, thereby determining whether the memory is reusable, the allocated memory size indicating the size of an area allocated to an allocatable area in the memory, and the deallocated memory size indicating the size of an area deallocated in the allocated area; if the memory is reusable, resetting the allocated memory size and deallocated memory size; and allocating an area of a requested size to the allocatable area of the memory.

The invention can be more fully understood from the following detailed description when taken in conjunction with the accompanying drawings, in which:
FIG. 1 is a block diagram showing a hardware configuration according to an embodiment of the invention;
FIG. 2 schematically shows a configuration of the memory shown in FIG. 1;
FIG. 3 shows a configuration of the memory shown in FIG. 2;
FIG. 4 is a flowchart to help explain an example of a memory block allocation process in the embodiment;
FIG. 5 is a flowchart to help explain an example of a memory block freeing process in the embodiment;
FIG. 6 is a diagram to help explain an example of the operation of a stream process in the embodiment;
FIG. 7 is a flowchart to help explain an example of the process of changing the maximum number of pages in the embodiment; and
FIG. 8 is a flowchart to help explain an example of the process of changing the minimum number of pages in the embodiment.

Hereinafter, referring to the accompanying drawings, an embodiment of the invention will be explained in detail.

### (First Embodiment)

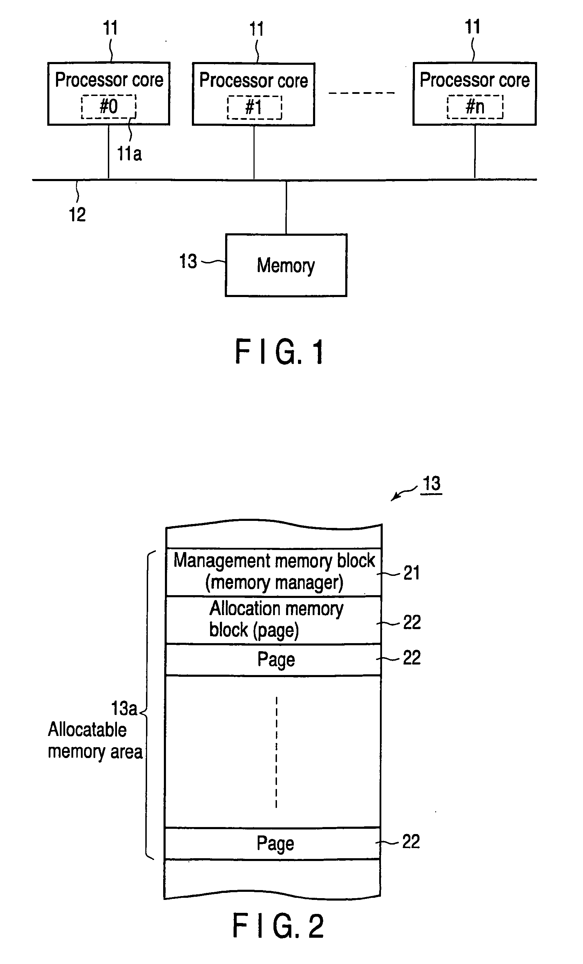

FIG. 1 schematically shows an example of the hardware configuration of a shared-memory multiprocessor system according to a first embodiment of the invention. In FIG. 1, a plurality of processors 11 are connected to a bus 12. To the bus 12, a memory 13 shared by the processors 11 is connected. Each of the processors 11 has, for example, a register 11a. Each of the registers 11a stores an identification number which differs from one processor 11 to another and is used to identify, for example, a 0-th to an n-th processor.

FIG. 2 schematically shows the configuration of the memory 13. The memory 13 has an allocatable memory area 13a. The allocatable memory area 13a is composed of a management memory block (memory manager) 21 which manages the allocatable memory area 13a and a plurality of allocation memory blocks (pages) 22. The memory manager 21 and pages 22 are not necessarily provided consecutively as shown in FIG. 2 and may be provided without dependence on the order or location.

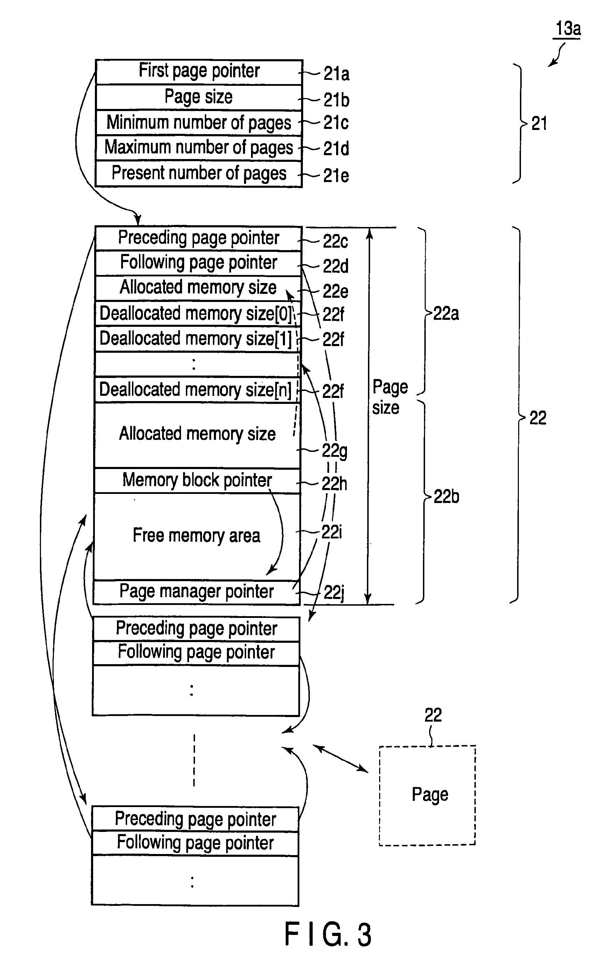

FIG. 3 shows a configuration of the allocatable memory area 13a shown in FIG. 2.

The memory manager 21 stores a first page pointer 21a showing the location of a first one of a plurality of pages 22, a page size 21b showing the capacity (size) of one page, the minimum number of pages 21c and the maximum number of pages 21d in the allocatable memory area 13a, and the number of pages showing the number of pages presently allocated.

In a case where virtual storage or the like is provided, when the upper limit of the used amount of the memory 13 is not restricted, the setting of the maximum number of pages 21d may be omitted.

Each of the pages 22, which is a memory area of a fixed length, is composed of a page manager 22a and a page body 22b. The page manager 22a manages the pages 22. The page body 22b is a memory area (storage unit) used for processing tasks or the like.

The page manager 22a is composed of a preceding page pointer 22c, a following page pointer 22d, an allocated memory size 22e (first storage capacity information), ant at least one deallocated memory size (second storage capacity). The preceding page pointer 22c indicates the location of a page 22 linked to a page before the page 22 to which the page manager 22a belongs. The following page pointer 22d indicates a page 22 linked to a page after the page 22 to which the page manager 22a belongs. The allocated memory size 22e shows the size of a memory block allocated to the page body 22b belonging to the page manager 22a. The deallocated memory size 22f shows the size of a memory block deallocated by the processor. The deallocated memory size 22f is stored so as to correspond to the identification number of each processor (or the core number of each processor).

Although the page manager 22a is set as a header at the beginning of each page, the location of the page manager 22a is not limited, provided that it lies within the page 22 to which it belongs. For example, the page manager 22a may be set as a footer.

The page body 22b is composed of an allocated memory area 22g, a free memory area 22i, and a page manager pointer 22j. The allocated memory area 22g is a memory block allocated when a task or the like is processed. Moreover, the allocated memory area 22g stores, for example, at its end, a memory block pointer 22h showing the location (address) of the page manager pointer 22j stored in the same page body 22b. In the memory block pointer 22h, the location (the leading address) of the page manager 22a may be stored. The free memory area 22i, which is an unused memory block, is allocated when a task or the like is processed. The page manager pointer 22j indicates the location of the page manager 22a of the page 22 to which the pointer 22j belongs. Moreover, the page manager pointer 22j is stored at the end of the page body 22b.

The pages 22 can be increased and decreased by the memory manager 21. That is, the number of pages can be increased using a memory area of the memory 13. To return a memory area to the memory 13, the number of pages can be decreased.

Each of the plurality of pages 22 has the same configuration. The pages are linked by the preceding page pointer 22c and following page pointer 22d, with the result that the pages are circularly connected.

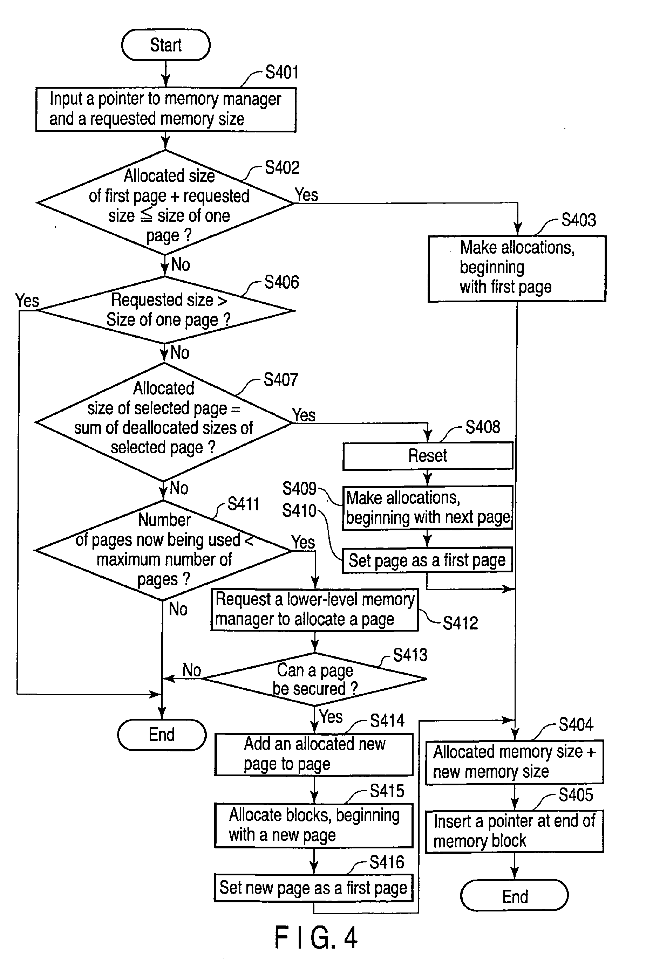

FIG. 4 is a flowchart to help explain an example of a memory block allocation process in the embodiment.

In the embodiment, the number of tasks of allocating memory blocks to the allocatable memory area 13a (hereinafter, abbreviated as allocation tasks) is only one. The allocation task is carried out on one of the plurality of processors.

In the allocation task, the pointer to the memory manager 21 and a requested memory size are input to the memory 13 (S401). On the basis of the pointer to the memory manager 21, the location of the allocatable memory area 13a having the memory manager 21 is calculated. On the basis of the first page pointer 21a set in the memory manager 21, the location of the page manager 22a of the page 22 set as the first page is calculated. For example, in an arbitrary task, it is determined whether the total of the allocated memory size 22e set in the selected page manager 22a and the input requested memory size is less than or equal to the size of one page (page size) set in the memory manager 21 (S402). If the total of the allocated memory size 22e of the first page and the requested memory size is less than or equal to the page size, the requested memory block is allocated to the page body 22b of the first page (S403). Thereafter, the memory size of a newly allocated memory block is added to the allocated memory size 22e of the page manager 22a, thereby updating the size (S404). Moreover, as shown in FIG. 3, the memory block pointer 22h is set at the end of the allocated memory block (S405) and a pointer to the allocated memory block is output, thereby completing the allocation.

In step S402, if the total of the allocated memory size 22e of the first page and the required memory size is larger than the page size, it is determined whether the required memory size is larger than the page size (S406). If the required memory size is larger than the page size, it is determined that the required memory block cannot be allocated to the allocatable memory area 13a. Then, the allocation task terminates the allocation of memory blocks to the allocatable memory area 13a.

In step S406, if the required memory size is less than or equal to the page size, the location of the next page is calculated on the basis of the following page pointer 22a set in the page manager 22a of the first page. Then, referring to the page manager 22a of the page 22 shown by the following page pointer 22d, it is determined whether a set allocated memory size 22e is equal to the sum of deallocated memory sizes 22f (S407). If the allocated memory size 22e set in the page manager 22a of the selected page 22 is equal to the sum of deallocated memory sizes 22f, this indicates that the page body 22b belonging to the selected page 22 has no memory area now being used and is reusable. In this case, the allocated memory size 22e set in the page manager 22a and the deallocated memory size 22f are all reset (S408) and, for example, an allocation task allocates the requested memory block to the page body 22b of the selected page (S409). Moreover, the first page pointer 21a of the memory manager 21 is updated on the basis of data that indicates the location of the selected page 22. The page 22 is set as a first page (S410). Then, the memory size of a newly allocated memory block is added to the allocated memory size 22e of the page manager 22a of the selected page, thereby updating the memory size (S404). Moreover, a memory block pointer 22h is set at the end of the allocated memory block (S405) and a pointer to the allocated memory block, which completes the allocation.

In step S407, if the allocated memory size 22e set in the page manager 22a of the selected page 22 is not equal to the sum of deallocated memory sizes 22f, the next page 22 is selected on the basis of the following page pointer 22d set in the page manager 22a and the decision in step S407 is made. If the condition in step S407 is not satisfied, step S407 is executed repeatedly until the first page shown by the first page pointer 21a set in the memory manager 21 has been selected. If the determination in step S407 is made on all the pages managed by the allocatable memory area 13a and there is no page that satisfies the condition, it is determined that the pages are running short (S407).

In this case, the present number of pages 21e set in the memory manager 21 is compared with the maximum number of pages 21d (S411). If the present number of pages 21e is greater than or equal to the maximum number of pages 21d, for example, the allocation is terminated since pages have been secured to a limit value. In this case, the allocation may not be terminated and may be forced to wait for the memory to be deallocated and for a free area to be formed.

In step S411, if the present number of pages 21e is less than the maximum number of pages 21d, for example, a memory manager (e.g., an operating system) lower in level than the memory manager 21 is required to secure a new page 22 using an area of the memory 13 (S412). Thereafter, it is determined whether there is free space for a new page 22 in the memory 13 (S413). If free space for a new page 22 cannot be secured in the memory 13, the securing of pages fails. In this case, too, the device may be configured to wait until a page has been secured as described above.

In step S413, if a page has been secured, the secured memory area is added as a new page 22 to the allocatable memory area 13a and the present number of pages 21e in the memory manager 21 is updated (S414). Then, a memory block is allocated to the page body 22b of the new page 22 (S415), the first page pointer 21a of the memory manager 21 is updated to a pointer to the new page 22, and the new page 22 is set as a first page (S416). Thereafter, the memory size of a newly allocated memory block is added to the allocated memory size 22e of the page manager 22a, thereby updating the memory size (S404). Moreover, a memory block pointer 22h is set at the end of the allocated memory block (S405) and the pointer to the allocated memory block is output, which completes the allocation.

Even if step S402 and step S406 are interchanged with each other in FIG. 4, the embodiment can be implemented.

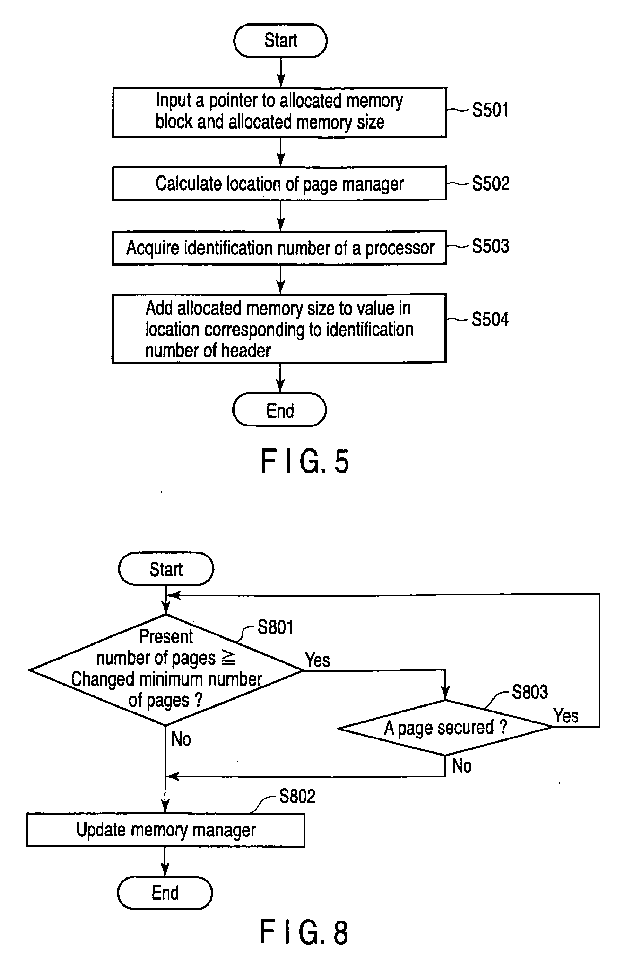

Next, using FIG. 5, an example of a memory deallocation process in the embodiment will be explained.

Although the number of tasks of allocating memory blocks is only one, the number of tasks of deallocating memory blocks (hereinafter, abbreviated as deallocation tasks) is not limited.

Input data to a deallocation task includes a pointer to the allocated memory area 22g and an allocated memory size 22e. The deallocation process produces no output.

When the memory block allocated to the allocatable memory area 13a is deallocated, the pointer to the allocated memory area 22g and the allocated memory size are input to a deallocation task (S501). The deallocation task calculates the location of the memory block to be deallocated on the basis of the pointer to the allocated memory area 22g. That is, on the basis of the memory block pointer 22h set at the end of the allocated memory area 22g shown in FIG. 3, the location of the page manager pointer 22j is calculated. On the basis of the page manager pointer 22j, the location of the page manager 22a to which pointer 22j belongs is calculated (S502). Thereafter, for example, the identification number set in the register of a processor to deallocate the allocated memory area 22g is referred to (S503). The register is referred to using a known instruction. On the basis of the identification number of the processor obtained by the above process, the deallocated memory size is added to the deallocated memory size 22f corresponding to the identification number of the processor set in the page manager 22a (S504). This completes the deallocation of the memory block.

Hereinafter, a concrete example will be explained.

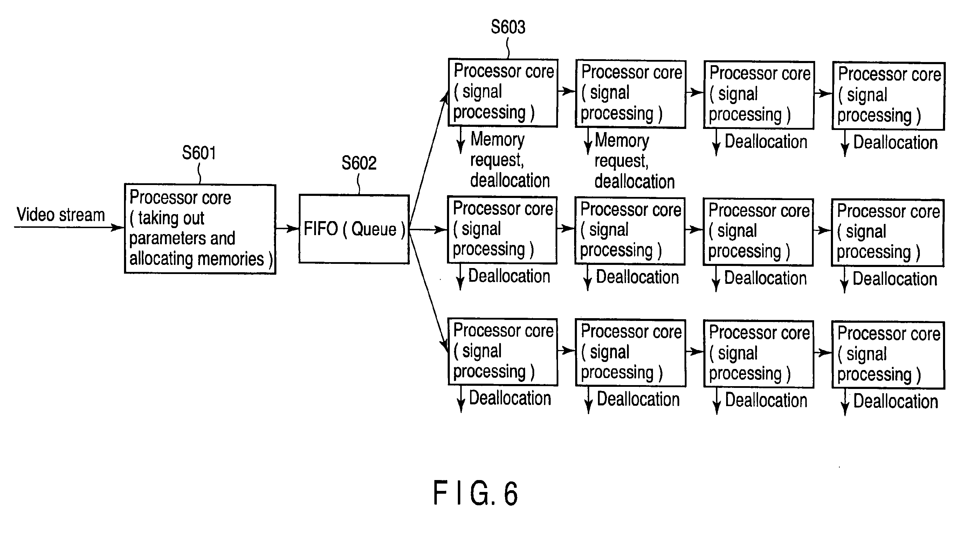

FIG. 6 schematically shows the operation when the system of FIG. 1 carries out a stream process, such as an MPEG reproduction process.

When a stream process, such as a compressed motion picture reproduction process, is executed, for example, a video stream analysis task analyzes the video stream and takes out parameter sets, such as difference pictures. An allocation task receives a memory block allocation request to store the parameter sets (S601). The parameter sets stored in the memory block are supplied sequentially to a first-in/first-out (FIFO) buffer (or a queue) (S602). Each signal processing task operates on the corresponding one of the processors, receiving data sequentially from the FIFO. The parameter sets are subjected to signal processing by the next signal processing task on the corresponding processor. In the signal processing, one decoding result is produced for a new parameter set. A memory block for storing the decoding result is requested from the allocation task. According to the request of each task, the allocation task allocates memory blocks as described above. After the signal processing task has completed the process, the allocated memory block including intermediate data is deallocated (S603). A deallocation task deallocates the memory block as described above according to the request of the signal processing task which has completed the process. The deallocated memory block is allocated as a new memory block by the allocation task.

In the embodiment, page 22 is a memory area of a fixed length. Each page has at least the allocated memory size 22e and the deallocated memory size 22f for each processor core. Specifically, the page manager 22a manages the total of the capacities of the memory blocks allocated to the page body 22b as the allocated memory size 22e and the capacity of the memory block deallocated for each processor 11 as the deallocated memory size 22f for each processor 11. Accordingly, the page manager 22a manages the allocated memory size 22e and the sum total of deallocated memory sizes 22f for each processor 11 and compares these, which makes it possible to determine whether there is a reusable memory area in the page body 22b. This makes exclusive control (locking) of processor cores unnecessary.

That is, the allocation task is unique and another task will never increase the allocated memory area 22g, while the allocation task is allocating a memory block. The memory blocks can be deallocated freely on a task basis. Accordingly, another task might increase the deallocated memory size 22f. At the same time, the feature makes it unnecessary to exclusively control processor cores 11 to prevent another task from allocating a memory block at the time of memory block allocation.

Moreover, since the deallocated memory size 22f is updated after the memory block is deallocated, a memory block will not be allocated to the memory block now being deallocated, which makes it unnecessary to lock the processor cores 11. In addition, since the memory area is caused to have a fixed length, there is no need to merge free memory areas 22i, which makes it unnecessary to lock the processor cores 11. Therefore, even if the number of processor cores 11 is increased, there is no need to lock the processor cores. This makes it possible to prevent a decrease in the processing capability due to a collision of the locked states and improve the capability in a scalable manner as the number of processor cores 11 increases.

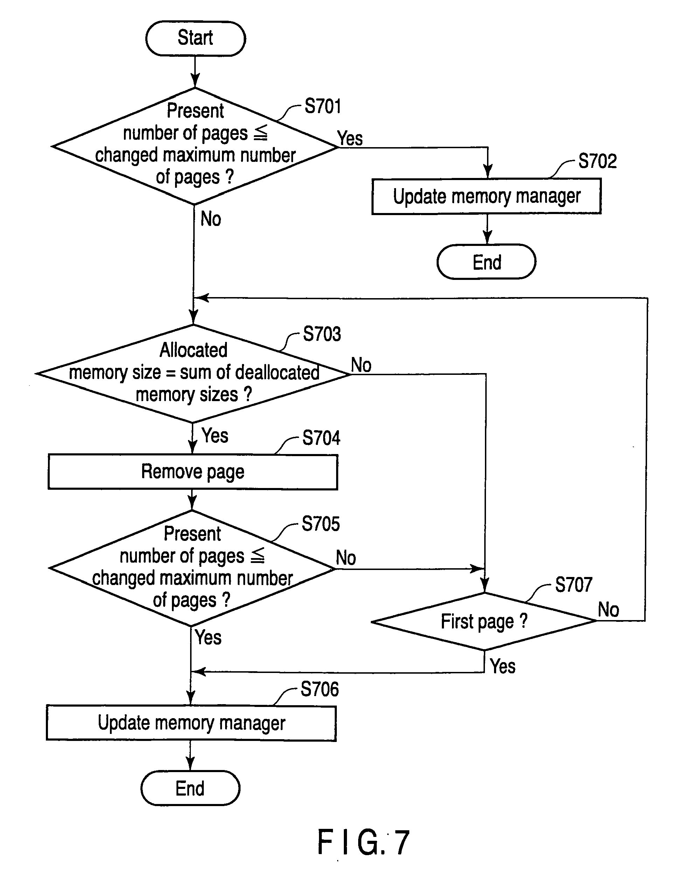

FIG. 7 shows an example of a method of changing the maximum number of pages 21d in the embodiment.

When the maximum number of pages 21d is changed by an allocation task, the present number of pages 21e set in the memory manager 21 is compared with the changed maximum number of pages 21d (S701). If the present number of pages 21e is less than or equal to the changed maximum number of pages 21d, the maximum number of pages 21d in the memory manager 21 has only to be updated (S702).

In step S701, if the present number of pages 21e exceeds the changed maximum number of pages 21d, the next page 22 is selected on the basis of the following page pointer 22d set in the page manager 22a of the first page and it is determined whether the allocated memory size 22e is equal to the sum of deallocated memory sizes 22f (S703). If the allocated memory size 22e is equal to the sum of deallocated memory sizes 22f, this page is in an unused state. Therefore, the link of the page is cancelled and page 22 is removed (S704). Then, the present number of pages 21e is compared with the changed maximum number of pages 21d (S705). If the present number of pages 21e is less than or equal to the changed maximum number of pages 21d, the memory manager 21 is updated (S706).

In step 703, if the allocated memory size 22e is not equal to the sum of deallocated memory sizes 22f, it is determined whether the presently selected page 22 is the page 22 indicated by the first page pointer 21a set in the memory manager 21 (S707). If the presently selected page 22 is not the first page, the next page 22 is selected on the basis of the following page pointer 22d set in the page manager 22a and the determination in step S703 is made.

If in step S705, the present number of pages 21e does not satisfy the condition that the present number is less than or equal to the changed maximum number of pages 21d, it is determined in step S707 whether the selected page is the first page.

In step S707, if the selected page 22 is the first page, the memory manager is updated (S706). However, if the selected page 22 is the first page, this means that all the pages 22 belonging to the allocatable memory area 13a have been determined and the present number of pages 21e has failed to meet the condition that the present number is less than or equal to the changed maximum number of pages 21d, and therefore the change of the maximum number of pages 21d has failed. If the change has failed, for example, the pointer or return code indicating the failure is output.

Here, in step S705, even if the present number of pages 21e satisfies the condition that the present number is less than or equal to the changed maximum number of pages 21d, all the pages 22 may be determined. Means for changing the maximum number of pages 21d is not limited to the flowchart of FIG. 7.

FIG. 8 shows an example of a method of changing the minimum number of pages 21c in the embodiment.

When an allocation task changes the minimum number of pages 21c, the present number of pages 21e set in the memory manager 21 is compared with the changed minimum number of pages 21c (S801). If the present number of pages 21e is greater than or equal to the changed minimum number of pages 21c, the minimum number of pages 21c in the memory manager 21 has only to be updated (S802).

In step 801, if the present number of pages 21e is less than the changed minimum number of pages 21c, it is determined whether there is free space for a new page 22 in the memory 13 (S803). If a memory area for a new page 22 has been secured in the memory 13, the secured memory area is added as a new page 22 to the allocatable memory area 13a and the present number of pages 21e set in the memory manager 21 is compared with the changed minimum number of pages 21c (S801).

In step S803, if a page has not been secured, the change of the minimum number of pages 21c fails. If the change has failed, for example, the pointer or return code indicating the failure is output.

Here, if a memory area never fails to be secured as needed, the setting of the minimum number of pages may be omitted.

With the embodiment, the number of pages which can be used by the allocatable memory area 13a is managed by the memory manager 21. The allocated memory size 22e set in the page manager 22a is compared with the sum of deallocated memory sizes 22f. If the allocated memory size 22e is equal to the sum, this means that the page has not been used at all and therefore it is determined that the page is reusable. Accordingly, since the memory area can be increased or decreased as needed, the memory 13 can be used efficiently. Moreover, since the number of pages specified by the minimum number of pages 21c has been secured, it is guaranteed that memory blocks are allocated successfully.

## Claims

1. A memory management device **characterized by** comprising:
a plurality of processors (11) capable of parallel operation; and
a memory (13) which is shared by said plurality of processors and which has an allocated memory size (22e) indicating the size of an area allocated to an allocatable area in the memory at the request of one of said plurality of processors and a deallocated memory size (22f) indicating the size of a deallocated area in the allocated area,
wherein one of said plurality of processors (11) compares the allocated memory size with the deallocated memory size, thereby determining whether the memory is reusable.

2. The memory management device according to claim 1, **characterized in that** the deallocated memory size (22e) is provided for said plurality of processors in a one-to-one correspondence and is updated by said plurality of processors, and
one of said plurality of processors determines whether the memory is reusable, on the basis of the sum of the deallocated memory sizes.

3. The memory management device according to claim 2, **characterized in that** the memory (13) has at least one page (22) of a fixed length including the allocatable area and a page management block (22a) which manages the allocated memory size and the deallocated memory sizes on a page basis.

4. The memory management device according to claim 3, **characterized in that** the memory (13) stores the maximum number of pages (21d) and
one of said plurality of processors, if the allocatable area in a page does not satisfy a memory size requested by any one of said plurality of processors, sets a new page in the memory within the range of the maximum number of pages.

5. The memory management device according to claim 4, **characterized in that** the memory (13) stores the minimum number of pages (21c) and has as many pages as specified by the minimum number of pages.

6. The memory management device according to claim 5, **characterized in that** the memory (13) has a memory management block 21 which manages the at least one page, the memory management block storing a first page pointer (21a) indicating the location of a first page, a page size (21b) indicating the capacity of one page, the minimum number of pages (21c) in the allocatable memory area, the maximum number of pages (21d) in the allocatable memory area, and the present number of pages (21e) in the allocatable memory area.

7. The memory management device according to claim 3, **characterized in that** the page management block (22a) further stores a first page pointer (22c) indicating the location of the preceding page and a second page pointer (22d) indicating the location of the following page.

8. The memory management device according to claim 4, **characterized in that** each of said plurality of processors (11) has a register (11a), each register storing an identification number for identifying the corresponding processor.

9. The memory management device according to claim 8, **characterized in that** each of said plurality of processors (11), when deallocating the memory, calculates the location of a page management block to which the allocated memory belongs, acquires the identification number set in the register of a processor deallocating an area in the allocated memory, and adds the deallocated memory size corresponding to the acquired identification number.

10. The memory management device according to claim 6, **characterized in that** one of said plurality of processors (11), when updating the maximum number of pages, compares the present number of pages with the changed maximum number of pages and, if the present number of pages is larger than the changed maximum number of pages, compares the allocated memory size with the sum of deallocated memory sizes to detect unused pages, and removes the unused pages.
